# EUROPEAN PATENT SPECIFICATION

(11) **EP 0 379 340 B1**
(45) Date of publication and mention of the grant of the patent: **30.11.1994**
(21) Application number: 90300455.4
(22) Date of filing: 17.01.1990
(51) Int. Cl.: C08K 9/06, C08L 83/04

(54) **Heat-curable silicone rubber compositions**
Hitzehärtbare Silikonkautschukzusammensetzung
Compositions de caoutchouc de silicone thermodurcissable

(30) Priority: 19.01.1989 JP 8521/89
(43) Date of publication of application: 25.07.1990
(73) Proprietor: Shin-Etsu Chemical Co., Ltd., Chiyoda-ku Tokyo 100 (JP)
(72) Inventor: Yoshida, Takeo, Annaka-shi, Gunma-ken (JP); Takahashi, Masaharu, Annaka-shi, Gunma-ken (JP); Fujiki, Hironao, Takasaki-shi, Gunma-ken (JP)
(74) Representative: Moore, Anthony John

(56) References cited:
- EP-A- 0 304 676
- EP-A- 0 319 839
- BE-A- 643 002
- US-A- 3 350 330
- US-A- 4 209 432

## Description

This invention relates to heat-curable organopolysiloxane compositions, the cured product of which has improved oil-resistance, steam-resistance, mechanical strength and mould-release capability.

It is generally considered that, to obtain a silicone rubber elastic with practical mechanical strength, a reinforcing silica filler with a specific surface of no less than 50 m²/g must be used as filler.

However, to make full use of such a reinforcing filler composed of superfine particles having a high specific surface area, their compounding property with silicone rubber must be facilitated by suppressing their tendency to form larger aggregations and the active silanol groups in order that their storage stability and workability may be improved to give the cured product various useful properties. Conventionally, dispersion agents such as low molecular weight siloxanes, esters, silanes with silanol groups and silanes with alkoxy groups are used as compounding auxiliaries, or alternatively silica of which the surface has first been rendered hydrophobic by treatment by siloxanes or silanes. Hydrophobic silicas treated by methyl siloxane units of the formula (CH₃)₂SiO_{2/2} (as discussed in US Patent No. 4,701,991) or (CH₃)₃SiO_{1/2} (as discussed in US Patent No. 3,837,878) are well known to those skilled in the art, and these substances are well known to be useful as reinforcing silicas for silicone rubber compounds. Silica treated with (CH₃)₃SiO_{1/2} units, for example, is useful to improve transparency, increase tear strength, increase dynamic fatigue resistance and increase release properties. On the other hand, hydrophobic silica surface-treated with (CH₃)₂Si0_{2/2} units is useful to increase steam-resistance and resistance to antifreeze such as LLC resistance.

Compositions using hydrophobic silicas surface-treated with, for example, (CH₃)₃Si0_{1/2} units are generally liable to show poorer heat-resistance, steam-resistance, and in particular LLC resistance. Further, if tubular products are cured by hot air vulcanization (HAV), the value of the Mooney viscosity generally falls. As a result, they easily deform after extrusion from the die or form tiny bubbles. Compositions using silica surface-treated with (CH₃)₂Si0_{2/2} units, on the other hand, suffer from the disadvantage that it is difficult to increase both the steam-resistance and dynamic fatigue resistance simultaneously.

After careful consideration of ways of overcoming the above problems, the inventors found that using silicas surface-treated with methyl siloxane units of the formula CH₃Si0_{3/2} made it possible to obtain properties that could not be obtained with silicone rubber containing hydrophobic silica that had been surface-treated with methyl siloxane units of the formula (CH₃)₂Si0_{2/2} or (CH₃)₃Si0_{1/2}.

A first object of the present invention is therefore to provide a composition and its cured elastic product with superior release capability when used, for example, as the material of master moulds for casting polyester resin or epoxy resin, and superior toner release capability when used as the material of the fixing roller in copying machines.

A second object of the present invention is to provide a new silicone rubber composition and its cured elastic product with excellent steam-resistance, LLC-resistance, and dynamic fatigue properties.

The objects of this invention are achieved by a heat curable silicone rubber composition characterized in that it comprises:
(1) 100 parts by weight of a diorganopolysiloxane of average degree of polymerization of from 100 to 20,000, represented by the average compositional formula:

   RₐSi0_{(4-a)/2}

   wherein R, which may be the same or different, is a substituted or unsubstituted monovalent hydrocarbon group and a is positive number of 1.95 to 2.05;
(2) from 10 to 100 parts by weight of a hydrophobic silica filler of which the surface has been treated by CH₃Si0_{3/2}, and which has a specific surface area of from 50 to 600 m²/g; and
(3) crosslinking agent selected from organic peroxides or a combination of organohydrogenpolysiloxane and platinum group compound.

The silicone elastomer which is obtained by curing the silicone rubber composition of this invention is especially useful as a material for forming the rubber parts of the cooling system of an automobile engine.

The silicone rubber composition of this invention uses a hydrophobic superfine silica filler which has been surface-treated by methyl siloxane units of the formula CH₃Si0_{3/2}. It therefore provides a new silicone rubber elastic which not only has practical mechanical strength, but also other composite characteristics which previous compositions did not have.

These characteristics include superior release capability if the composition is used, for example, as the material of master moulds for casting polyester resin or epoxy resin, superior toner release capability if it is used as the material of the fixing roller in copying machines, and excellent steam resistance, LLC resistance and dynamic fatigue properties.

The first component of the silicone rubber composition of this invention, that is the diorganopolysiloxane, is represented by the average compositional formula:

RₐSi0_{(4-a)/2}

In this formula, R, which may be the same or different, represents an unsubstituted or substituted monovalent hydrocarbon group, preferably having from 1 to 10 carbon atoms, and more preferably having from 1 to 6 carbon atoms, and selected from alkyl groups such as methyl, ethyl or propyl, alkenyl groups such as vinyl, allyl or butenyl, aryl groups such as phenyl, tolyl or those groups wherein part or all of the hydrogen atoms combined with carbon atoms are replaced by halogen atoms or cyano groups to give groups such as chloromethyl, chloropropyl, 3,3,3,-trifluoropropyl and 2-cyanoethyl; and letter a is a positive number of from 1.95 to 2.05. It is preferable that the molecular structure of said diorganopolysiloxane is a straight chain, but it may also be partially branched. Further, the degree of polymerization may be from 100 to 20,000, but from the viewpoint of mechanical properties and workability, it should preferably be within the range of from 200 to 10,000.

The second component of the composition of this invention, that is the hydrophobic silica filler which has been surface-treated with methyl siloxane units of the formula CH₃Si0_{3/2} and which has a specific surface area of 50 - 600 m²/g, is a new type of superfine silica filler, and it constitutes the basis of this invention. Examples of this superfine silica filler are fumed silica and wet silica of which the surface has been rendered hydrophobic with CH₃Si0_{3/2} units. Either one of these fillers, used independently or as a mixture of two or more thereof, may be added to reinforce the silicone rubber, or to confer desired properties upon it. The specific surface area of these superfine silicas is from 50 m²/g to 600 m²/g, but from the viewpoint of reinforcing properties and workability in the compounding process, it should preferably be from 70 to 400 m²/g.

The mixing proportion of said hydrophobically-treated superfine silica fillers should preferably be from 10 to 100 parts by weight per 100 parts by weight of said diorganopolysiloxane, but should more preferably lie within the range of from 15 to 80 parts by weight.

If the proportion is less than 10 parts by weight, sufficient reinforcing properties are not obtained, while if the proportion is greater than 100 parts by weight, workability properties such as mould flow and discharge, and mechanical strength, decline severely.

In this invention, other fillers conventionally used in the manufacture of silicone rubber may also be added in suitable proportions. Known fillers that may be used concurrently include, for example, silica fillers such as diatomaceous earths and quartz powder, and inorganic fillers such as iron oxide, titanium oxide, calcium carbonate and carbon black.

In addition, colouring agents such as pigments, flame-retardant agents and agents to increase heat-resistance may be added as necessary.

Dispersing agents may also be added to improve the dispersion of said second component in said first component, the diorganopolysiloxane. Examples of dispersing agents are diphenylsilanediol, alkoxy silanes or their partial hydrolysis condensation products, hexamethyldisilazane, and low polymerization silicone oils.

The cross linking agent selected from an organic peroxide or combination of organohydrogenpolysiloxane and platinum group compound which is the third component of the silicone rubber composition of this invention, functions as a crosslinking catalyst.

Examples of organic peroxides are benzoyl peroxide, monochlorobenzoyl peroxide, 2,4-dichlorobenzoyl peroxide, p-methyl benzoyl peroxide, t -butyl perbenzoate, dicumyl peroxide, 2,5-bis-(t-butyl peroxy)-2,5-dimethylhexane and 2,5-bis-(t-butyl peroxy)-2,5-dimethylhexyne. Either one, or two or more of these peroxides in combination may be used, and it is preferable that their proportion with respect to the 100 parts by weight of the first component, diorganopolysiloxane, is from 0.1 to 5 parts by weight.

An alternative way to effect crosslinking of the organopolysiloxane is to utilize the so-called hydrosilation reaction. When the diorganopolysiloxane as the first component has at least two alkenyl groups such as vinyl groups bonded to the silicon atoms in a molecule, the silicon-bonded vinyl groups are susceptible to any addition reaction with hydrogen atoms directly bonded to the silicon atoms of another organopolysiloxane in the presence of the platinum group compound catalyst. Therefore, the above-mentioned organic peroxide as a crosslinking agent can be replaced with a combination of an organohydrogenpolysiloxane having at least two hydrogen atoms directly bonded to the silicon atoms in a molecule and a catalytic amount of a platinum compound. The organohydrogenpolysiloxane is represented by the average unit formula R¹_{b}H_{c}Si0_{(4-b-c)/2}, in which R¹ is a substituted or unsubstituted monovalent hydrocarbon group which is the same as R of the first component or, preferably, a methyl group, and b and c are each a positive number with the proviso that b+c is from 1.0 to 3.0. The amount of the organohydrogenpolysiloxane in the inventive composition should be sufficient to provide from 50 to 300 mol% of the silicon-bonded hydrogen atoms based on the alkenyl groups in the first component. The platinum group compound is preferably chloroplatinic acid, complexes of chloroplatinic acid with olefines or vinylsiloxane, or an alcohol solution of chloroplatinic acid, as catalyst for the curing process. In this case, the proportion of addition should preferably be from 0.5 to 500 ppm by weight, and more preferably from 2 to 200 ppm, with respect to the first component, the diorganopolysiloxane.

In manufacturing the composition of this invention, the above components (1) - (3) are mixed together homogeneously in the specified proportions by known compounding methods. The silicone rubber composition thus produced is then cast into the desired shape and heated so as to obtain an elastic cast. This elastic cast not only has excellent mechanical properties but also other composite characteristics which have not so far been obtained, and it finds useful application in, for example, the rubber parts of the cooling system surrounding automobile engines.

This invention will now be illustrated in more detail by the following Examples, but it should be understood that it is no way limited thereby. It should also be noted that the word "parts" in the Examples refers in all cases to parts by weight.

### EXAMPLE 1

To 25 parts of a gum-like organopolysiloxane of average polymerization degree 8,000 consisting of 99.825 mol% of (CH₃₎₂Si0 units, 0.15 mol% of CH₃(CH₂=CH)Si0 units and 0.025 mol% of (CH₃)₂(CH₂=CH)Si0_{1/2} units, and 75 parts of a gum-like orgnaopolysiloxane of average polymerization degree 8,000 consisting of 99.975 mol% of (CH₃)₂ Si0 units and 0.025 mol% of (CH₃)₂(CH₂=CH)Si0_{1/2} units, were added 2.5 parts of a dimethylpolysiloxane with terminal silanol groups and a polymerization degree n of 10 (dispersion agent), and 47 parts of a hydrophobic silica which had been surface-treated with (CH₃)Si0_{3/2} and had a specific surface of 270 m²/g. These components were mixed and kneaded together by a mixing rollers and then heated at 150^{o}C for 4 hours to obtain a base compound.

To this base compound were added 0.5 parts of cerium oxide and 0.8 parts of 2,4-dichlorobenzoyl peroxide (vulcanizing agent), and the mixture again kneaded by a mixing rollers to obtain a silicone rubber composition (which shall hereafter be referred to as Sample A).

Said Sample A was press-vulcanized at 120^{o}C under a pressure of 30 kg/cm² for 10 minutes so as to obtain a sheet of thickness 2 mm. This sheet was then heated at 200^{o}C for 4 hours, and after curing its physical properties were measured. Table 1 shows the results. Apart from hardness and tearing strength, which were measured according to JISA and JISB, all measurements of physical properties were made according to JIS-K-6301.

**TABLE 1**

| (Initial Physical Properties) | |
|---|---|
| Hardness, JIS A | 52 |
| Tensile Strength (kgf/cm²) | 108 |
| 100% Modulus (kgf/cm²) | 21 |
| Elongation (%) | 650 |
| Tear Strength (kgf/cm), JIS A | 37 |
| Rebound (%) | 56 |

As can be seen from the results of table 1, Sample A of this invention is a composition which gives a silicone rubber of very high elasticity and high strength.

The physical properties of this silicone rubber after heating it at 250^{o}C for 24 hours (heat-resistance), and after soaking it in ASTM No 1 oil at 150^{o}C for 70 hours (oil-resistance), are shown in Table 2 and Table 3 respectively.

**TABLE 2**

| | |
|---|---|
| Hardness, JIS A | 54 |
| Tensile Strength (kgf/cm²) | 95 |
| Elongation (%) | 540 |
| Tear Strength (kgf/cm), JIS A | 28 |

**TABLE 3**

| | |
|---|---|
| Hardness, JIS A | 48 |
| Tensile Strength (kgf/cm²) | 92 |
| Elongation (%) | 610 |
| Change of Volume (%) | +10.5 |

From the results of Table 2 and Table 3, it is concluded that the silicone rubber elastic obtained from the composition of this invention has excellent heat-resistance and oil resistance.

### EXAMPLE 2

To 100 parts of a gum-like organopolysiloxane of average polymerization degree 8,000 consisting of 99.575 mol% of (CH₃)₂Si0 units, 0.4 mol% of CH₃(CH₂=CH)Si0 units and 0.025 mol% of (CH₃)₃Si0_{1/2} units, were added 3.0 parts of a dimethylvinylpolysiloxane containing 10 mol% of vinyl groups and terminal silanol groups (polymerization degree n=10), and 40 parts of a hydrophobic silica which had been surface-treated with CH₃Si0_{3/2} unit and had a specific surface area of 130 m²/g, and the mixture was kneaded as in Example 1 to give a base compound. To this base compound were then added 0.5 parts of iron oxide (Fe₂0₃) and 0.5 parts of 2,5-bis-(t-butyl peroxy)-2,5-dimethylhexane as vulcanizing agent, and the mixture was kneaded by a mixing rollers to give a silicone composition which shall be hereafter referred to as Sample B).

Said Sample B was press-vulcanized at 170^{o}C under a pressure of 30 kg/cm² for 8 minutes to give a sheet of thickness 2 mm, and a right cylindrical article of 12.65 mm thickness and about 29 mm in diameter. After carrying out a post cure at 200^{o}C for 4 hours, initial physical properties, permanent compression set [25% compression in air at 180^{o}C for 72 hours, and 25% compression in 50% antifreeze (long life coolant, LLC/H₂0=50/50) at 175^{o}C for 72 hours], and dynamic fatigue properties at repeated elongation of 0.80% using a dumbbell-shaped piece of product were measured. Table 4 shows the results.

**TABLE 4**

| Initial Physical Properties | Example 2 Sample B | Comp. Example 1 Sample C |
|---|---|---|
| Hardness, JIS A | 70 | 70 |
| Tensile Strength (kfg/cm²) | 85 | 77 |
| Elongation (%) | 160 | 130 |
| Tear Strength (kgf/cm), JIS B | 18 | 13 |

| Permanent Compression Set | | |
|---|---|---|
| In air (%) | 6.1 | 5.6 |
| In LLC (%) | 63 | 71 |

| Dynamic Fatigue Properties | | |
|---|---|---|
| JIS Dumbbell (Cycle) | 2,300,000 | 1,200,000 |

### COMPARATIVE EXAMPLE 1

Apart from the use of 40 parts of a hydrophobic silica surface-treated with (CH₃)₂Si0_{2/2} units and having a specific surface of 130 m²/g as filler, the same composition as that in Example 2 was used to prepare Sample C, and the properties of the vulcanized product were measured in the same was as in Example 2. Table 4 shows the results obtained beside those obtained in Example 2.

The results of Table 4 prove that the silicone rubber elastic obtained from Sample B, a silicone rubber composition of this invention, has far superior initial physical properties, permanent compression set and dynamic fatigue properties in comparison to the sample of the Comparative Example.

### EXAMPLE 3

To 100 parts of a diorganopolysiloxane oil of polymerization degree 500 of which the main chain consisted of (CH₃)₂Si0 units, and the terminal groups consisted of (CH₃)₃(CH₂=CH)Si0_{1/2} units, were added 25 parts of hydrophobic silica which had been surface-treated with CH₃Si0_{3/2} units and which had a specific surface area of 250 m²/g, and the mixture was kneaded in a planetary mixer until homogeneous. To 100 parts of this base compound were then added 1.5 parts of a methyl hydrogen polysiloxane represented by the formula: 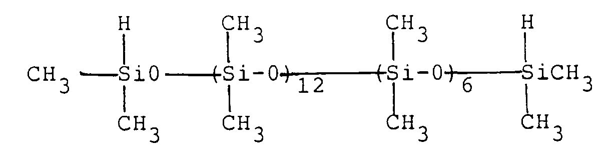
and 0.1 parts of a solution of a platinum complex with 2-ethylhexanol and acetylene alcohol containing 2% by weight of platinum, and the mixture was kneaded until homogeneous to give Sample D.

Sample D was placed in a mould, and heated in an oven at 80^{o}C for 30 minutes to give a square block. An epoxy resin containing a hardening agent was run into this block and after setting, the resin was removed from the block. The casting and removal operations were then repeated. It was found that these operations could be repeated on average about 20 times, thus showing that the product obtained from the silicone composition of this invention has excellent mould-release capability.

### COMPARATIVE EXAMPLE 2

Apart from the use of a hydrophobic silica surface-treated with (CH₃)₃Si0_{1/2} units and having a specific surface of 250 m²/g as filler, the same components as those in Example 3 were used to prepare Sample E of a silicone rubber composition. The mould-release capability with respect to epoxy resin was measured by the same method as in Example 3. It was found that the removal operation could be carried out on average 13 times, thereby confirming that the mould-release capability was inferior to that of the product obtained from the silicone rubber composition of this invention.

## Claims

1. A heat-curable silicone rubber composition characterised in that it comprises:
(1) 100 parts by weight of a diorganopolysiloxane of average degree of polymerization of from 100 to 20,000, represented by the average compositional formula:
RₐSiO_{(4-a)/2}
wherein R represents the same or different monovalent hydrocarbon groups, which groups may either be unsubstituted or be substituted by halogen or cyano groups, and wherein a is a positive number of from 1.95 to 2.05;
(2) 10 to 100 parts by weight of hydrophobic silica filler of which the surface has been treated by a siloxane of the formula CH₃SiO_{3/2}, and which has a specific surface area of from 50 to 600 m²/g; and
(3) cross-linking agent selected from organic peroxides or a combination of organohydrogenpolysiloxane and platinum group compound.

2. A composition as claimed in Claim 1, wherein said diorganopolysiloxane is a straight chain compound.

3. A composition as claimed in Claim 1 or 2, wherein the degree of polymerization of said diorganopolysiloxane is from 200 to 10,000.

4. A composition as claimed in Claim 1, 2 or 3, wherein the hydrophobic silica filler is at least one superfine silica filler selected from fumed silica and wet silica of which the surface has been rendered hydrophobic by treatment with methyl siloxane units of the formula CH₃SiO_{3/2}.

5. A composition as claimed in any preceding claim, wherein the specific surface area of the silica filler is from 70 to 400 m²/g.

6. A composition as claimed in any preceding claim, wherein the proportion of the silica filler is from 15 to 80 parts by weight per 100 parts by weight of said diorganopolysiloxane.

7. A composition as claimed in any preceding claim and additionally comprising at least one agent selected from colouring agents, flame retardant agents and agents for increasing heat-resistance.

8. A composition as claimed in any preceding claim, wherein said diorganopolysiloxane contains a dispersing agent.

9. A composition as claimed in Claim 8, wherein said dispersing agent is at least one selected from diphenylsilane-diol, alkoxy silanes or their partial hydrolysis condensation products, hexamethyldisilazane, and low polymerization silicone oils.

10. A silicone elastomer obtained by curing a silicone rubber composition as claimed in any preceding claim.

## Patentansprüche

1. Hitzehärtbare Silikonkautschukzusammensetzung, dadurch gekennzeichnet, daß sie besteht aus:
1) 100 Gewichtsteilen eines Diorganopolysiloxans mit durchschnittlichem Polymerisierungsgrad von 100 bis 20.000, der allgemeinen Zusammensetzungsformel:
RₐSiO_{(4-a)/2'}
wobei R die gleiche oder verschiedene monovalente Hydrocarbon-Gruppen wiedergibt, welche Gruppen entweder durch Halogene oder Cyano-Gruppen substituiert oder auch nicht-substituiert sein können und wobei a eine positive Zahl zwischen 1,95 und 2,o5 ist;
2) 10 bis 100 Gewichtsteilen eines hydrophobischen Siliziumoxidfüllers, dessen Oberfläche durch ein Siloxan der Formel CH₃SiO_{3/2} behandelt worden ist und der eine spezifische Oberfläche zwischen 50 und 600 m²/g aufweist; und
3) ein Vernetzungsmittel, ausgewählt aus organischen Peroxiden oder einer Kombination aus Organohydrogenpolysiloxan und einer Platingruppenverbindung.

2. Zusammensetzung nach Anspruch 1, dadurch gekennzeichnet, daß das Diorganopolysiloxan eine Verbindung mit gerader Kette ist.

3. Zusammensetzung nach Anspruch 1 oder 2, bei welchem der Polymerisierungsgrad des Diorganopolysiloxans zwischen 200 und 10.000 liegt.

4. Zusammensetzung nach Anspruch 1, 2 oder 3, wobei der hydrophobe Siliziumoxidfüllstoff wenigstens ein superfeiner Siliziumfüllstoff ist, der ausgewählt ist aus verdampftem Siliziumoxid und nassem Siliziumoxid, dessen Oberfläche durch Behandlung mit Methylsiloxan Einheiten der Formel CH₃SiO_{3/2} hydrophob gemacht worden ist.

5. Zusammensetzung nach einem der vorhergehenden Ansprüche, wobei die spezifische Oberfläche des Siliziumfüllstoffes zwischen 70 und 400 m²/g liegt.

6. Zusammensetzung nach einem der vorhergehenden Ansprüche, wobei die Menge des Siliziumfüllstoffs zwischen 15 und 80 Gewichtsteilen pro 100 Gewichtsteilen des genannten Diorganopolysiloxans liegt.

7. Zusammensetzung nach einem der vorhergehenden Ansprüche, die zusätzlich wenigstens ein Mittel enthält, welches aus Färbemitteln, flammenhemmenden Mitteln und Mitteln zum Erhöhen der Hitzebeständigkeit ausgewählt ist.

8. Zusammensetzung nach einem der vorhergehenden Ansprüche, wobei das genannte Diorganopolysiloxan ein Dispergiermittel enthält.

9. Zusammensetzung nach Anspruch 8, wobei das Dispergiermittel wenigstens eines der nachfolgend aufgeführten Mittel enthält: Diphenylsiloxan-Diol, Alkoxysilan oder ihre teilhydrolyse Kondensationsprodukte, Hexamethyldisilazan und niedrigpolymerisierte Silikonöle.

10. Silikonelastomer, erhalten durch Anshärten einer Silikongummizusammensetzung nach einem der vorhergehenden Ansprüche.

## Revendications

1. Composition de caoutchouc de silicone thermodurcissable (vulcanisable à chaud), composition caractérisée en ce qu'elle comprend :
(1) 100 parties en poids d'un diorganopolysiloxane présentant un degré moyen de polymérisation de 100 à 20 000, composé représenté par la formule moyenne de composition :
RₐSiO_{(4-a)/2}
formule dans laquelle R représente des groupes hydrocarbonés monovalents, identiques ou différents, ces groupes pouvant être non substitués ou bien substitués par de l'halogène ou par des groupes cyano et a étant un nombre positif valant de 1,95 à 2,05;
(2) 10 à 100 parties en poids d'une charge formée par de la silice hydrophobe dont la surface a été traitée par un siloxane de formule CH₃SiO_{3/2}, et qui a une aire de surface spécifique de 50 à 600 m²/g; et
(3) un agent de réticulation, choisi parmi des peroxydes organiques ou une combinaison d'un organohydrogénopolysiloxane et d'un composé d'un élément du groupe ou de la famille du platine.

2. Composition telle que revendiquée à la revendication 1, dans laquelle ledit diorganopolysiloxane est un composé en chaîne droite (linéaire).

3. Composition telle que revendiquée à la revendication 1 ou 2, dans laquelle le degré de polymérisation dudit diorganopolysiloxane est compris entre 200 et 10 000.

4. Composition telle que revendiquée à la revendication 1, 2 ou 3, dans laquelle la charge de silice hydrophobe est constituée par au moins une charge de silice superfine choisie parmi de la fumée de silice et de la silice humide dont la surface a été rendue hydrophobe par son traitement par des motifs méthylsiloxane de formule CH₃SiO_{3/2}.

5. Composition telle que revendiquée dans l'une quelconque des revendications précédentes, dans laquelle l'aire de surface spécifique de la charge de silice se situe entre 70 et 400 m²/g.

6. Composition telle que revendiquée dans l'une des revendications précédentes, dans laquelle la proportion de la charge de silice est de 15 à 80 parties en poids pour 100 parties en poids dudit diorganopolysiloxane.

7. Composition telle que revendiquée dans l'une quelconque des revendications précédentes, et qui comprend en outre au moins un agent choisi parmi des agents de coloration, des agents retardant la propagation d'une flamme et des agents pour augmenter la résistance à la chaleur.

8. Composition telle que revendiquée dans l'une quelconque des revendications précédentes, dans laquelle ledit diorganopolysiloxane contient un agent de dispersion.

9. Composition telle que revendiquée à la revendication 8, dans laquelle ledit agent de dispersion est constitué par au moins un agent choisi parmi du diphénylsilane-diol, des alcoxy silanes ou leurs produits de condensation et d'hydrolyse partielle, de l'hexaméthyl disilazane et des huiles de silicone à faible degré de polymérisation.

10. Elastomère de silicone, obtenu par le durcissement par vulcanisation d'une composition de caoutchouc de silicone telle que revendiquée dans l'une quelconque des revendications précédentes.
